Europäisches Patentamt

European Patent Office

Office européen des brevets

(11) Veröffentlichungsnummer: **0 283 770**
A2

# (12) EUROPÄISCHE PATENTANMELDUNG

(21) Anmeldenummer: 88103096.9

(22) Anmeldetag: 02.03.88

(51) Int. Cl.⁴ **E02D 19/18** , B29C 65/18 , F16B 5/00

(30) Priorität: 24.03.87 DE 3709303
13.04.87 DE 3712535
06.06.87 DE 3719079
02.10.87 DE 3733388

(43) Veröffentlichungstag der Anmeldung:
28.09.88 Patentblatt 88/39

(84) Benannte Vertragsstaaten:
AT BE DE FR GB NL

(71) Anmelder: Niederberg-Chemie GmbH
Postfach 11 63
D-4133 Neukirchen-Vluyn(DE)

(72) Erfinder: Schlütter, Aloys
Rheinstrasse 42
D-4152 Kempen 3(DE)
Erfinder: Kaewert, Klaus
Gänsestrasse 4
D-4000 Düsseldorf 13(DE)
Erfinder: Witolla, Christian
Fraunhoferstrasse 69
D-4100 Duisburg 1(DE)
Erfinder: Rösler, Hans-Jürgen
Dorfstrasse 236
D-4173 Kerken 3(DE)
Erfinder: Schürmann, Ulrich
Margarethenstrasse 10
D-4130 Moers 1(DE)
Erfinder: Pylen, Johannes Theodor
Rheindahlener Strasse 303
D-4060 Viersen 11(DE)

(54) Abdichtung für Schlitzwände.

(57) Nach der Erfindung werden die Schlösser von Abdichtungsbahnen für Erdschlitze verschweißt. Dazu sind die zugehörenden Profile mit Wasser- und/oder Druckluftkanälen und im Bereich der Dichtflächen mit Spülkanälen versehen und wird das Schweißgerät so durch eines der Profile gezogen, daß die Dichtflächen unter entsprechender Plastifizierung aneinandergedrückt werden oder es wird zunächst in dem Spalt zwischen den Dichtflächen eine Heizpatrone hochgezogen und mit Nachlauf ein Anpresskörper hochgezogen wobei für den Anpresskörper eines der Profilteile mit einer flexiblen Membram versehen ist und der Anpresskörper zwischen der Membran und dem zugehörenden Profilteil hochgezogen wird oder es wird eine Schweißpatrone durch die ineinandergeschobenen Fugenbänder gezogen, die im Bereich des Dicht-spaltes aufgeschmolzenes Material der Fugenbänder umformt und dadurch Schmutzpartikel einbettet.

FIGUR 8

## Abdichtung für Schlitzwände

Die Erfindung betrifft eine Abdichtung für Schlitzwände, wobei die Schlitzwände durch Ausheben von Erdschlitzen, deren Verfüllen mit Bentonit oder dergleichen entstehen und die Abdichtung durch Einziehen bzw. Absenken einzelner Bahnen gebildet wird, die sich beim Absenken an ihren Rändern miteinander verbinden, und wobei als Verbindung ineinanderschiebbare Profile vorgesehen sind.

Schlitzwände kommen vorzugsweise vor zur Abdichtung wasserführender Schichten. Die Schlitzwände durchtrennen dann die Schichten. Die Abdichtung entsteht, in dem die Schlitzwände bis zu einer wasserundurchlässigen Schicht geführt werden. Das kann Schlitzwandtiefen bis zu 100 m und mehr erforderlich machen.

Um große Schlitzwandtiefen zu vermeiden ist bereits vorgeschlagen worden, die Schlitzwände mit einer Horizontalabdichtung zu kombinieren. Die Horizontalabdichtungen können in verschiedenster Form gebildet werden. Eine sichere Ausbildung der Horizontalabdichtung wird in einem bergmännischen Unterfahren des abzudichtenden Bereiches unter gleichzeitiger Verfüllung des Ausbruches mit Dichtmaterial gesehen.

Schlitzwände können zur Abdichtung von Dämmen, zum Anlegen von Teichen und Kanälen dienen. Die bevorzugte Anwendungsform ist die Abdichtung eines kontaminierten Bereiches. Derartige kontaminierte Bereiche sind beispielsweise Deponien. Die Deponien enthalten zum Teil in ungeklärtem Umfang Umweltgifte, die von Oberflächenwasser und aufsteigendem Grundwasser ausgetragen werden. Um das zu verhindern, kann eine Einkapselung mit Hilfe von Schlitzwänden und ggf. Oberflächenabdeckung und ggf. Horizontalabdichtung gebildet werden.

Die Schlitzwände entstehen durch Ausheben von Erdschlitzen entlang der Abdichtungslinie. Beim Ausheben wird zugleich Bentonit in den Erdschlitz verfüllt. Bentonit hat zwei Funktionen. Zum einen stützt er das umgebende Erdreich und verhindert dadurch einen Ausbruch. Zum anderen hat der Bentonit eine Dichtfunktion. Die Dichtfunktion kann durch Zusatz von Zement und dergleichen noch verbessert werden. Für Deponien wird die bloße Abdichtung mit Bentonit oder dergleichen jedoch als unzureichend angesehen. Deshalb ist es bekannt, Abdichtungsbahnen in den Bentonit abzusenken, die beim Absenken an den Rändern miteinander verbunden werden und dann eine zusammenhängende Abdichtung bilden. Die Abdichtungsbahnen bestehen aus Kunststoff, z. B. Hochdruckpolyäthylen, PVC oder einem Äthylencopolymer-Bitumengemisch.

Die Verbindung der Abdichtungsbahnen an den Rändern wird mit Hilfe von Profilen erreicht, die vorzugsweise separat hergestellt werden und dann am Bahnenrand verschweißt werden. Ein sehr vorteilhaftes Profil besitzt am einen Bahnenrand einen widerhakenförmigen Querschnitt und am anderen Bahnenrand einen Querschnitt, der den Widerhaken beim Ineinanderschieben der Profile bzw. Absenken der Bahnen umfaßt.

Die Profile sind gewählt worden, weil ein Verschweißen der Bahnenränder im Bentonit bislang als nicht wirtschaftlich durchführbar angesehen worden ist. Allerdings zeigt sich, daß mit dem bloßen Ineinanderschieben von Profilen immer noch keine 100%ige Abdichtung gewährleistet ist. In den Dichtstellen der Profile wird noch eine erhebliche Leckgefahr gesehen. Deshalb ist in der Vergangenheit eine Lösung entwickelt worden, bei der ein Dichtungsmittel vorzugsweise ein Kunstharz, zwischen die Dichtflächen der Profile verpreßt wird. Dabei wird der Kunstharz wahlweise zunächst durch einen separaten Kanal in einen der Profile an den Fuß der Schlitzwand geführt, um von dort zwischen die Dichtflächen der Profile zu treten. Sofern dann der Kunstharz bei weiterem Pressen oben an den Profilen austritt, wird davon ausgegangen, daß eine ausreichende Abdichtung vorhanden ist. Jedoch ist diese Abdichtungsmethode noch mit einiger Unsicherheit behaftet.

Der Erfindung liegt die Aufgabe zugrunde, eine absolute Abdichtung an den Dichtflächen der Profile zu gewährleisten. Dabei geht die Erfindung von der Überlegung aus, daß das nur eine Verschweißung in länglicher Abdichtung bewirkt.

Nach der Erfindung wird die Verschweißung dadurch erreicht, daß ein Schweißgerät durch mindestens eines der Profile, welches dazu mit einem entsprechenden Kanal versehen ist, geschoben wird und dabei aneinanderliegende Dichtflächen der Profile aufschmilzt. Gleichzeitig wird Druck auf die Dichtflächen ausgeübt, so daß eine Verschmelzung der beiden Profile an den aneinanderliegenden Dichtflächen stattfindet. Der gewünschte Schweißdruck entsteht, in dem das Schweißgerät eine geringfügige Aufweitung des Kanals bewirkt. Mit dieser Maßnahme allein ist nach der Erfindung jedoch noch keine saubere Schweißnaht gegeben. Vielmehr gehört nach der Erfindung zur Verschweißung eine Schweißnahtvorbereitung. Die Schweißnahtvorbereitung sieht ein Säubern der zur Verschweißung gelangenden Dichtflächen vor. Dieses Säubern erfolgt in Anwendung der an sich bekannten Kanäle in den Profilen. Nach der Erfindung werden die an sich für die Verpressung von Kunstharz vorgesehenen Kanäle zum Spülen mit Wasser und/oder Druckluft verwendet. Besonders vorteilhaft ist eine Spülung, die zunächst mit Wasser erfolgt und anschließend eine Druckluftspülung vorsieht. Das Wasser säubert die Schweißflächen von Schmutzpartikeln. Die Druckluftspülung bewirkt eine Trocknung. Das gilt vor allem für erwärmte Druckluft.

Der so gesäuberte Kanal zwischen beiden Profilen wird dann nach der Erfindung durch Aufweitung des Kanales für das Schweißgerät geschlossen. Dementsprechend ist der Kanal für das Schweißgerät so angeordnet, daß der freigeblasene Kanal und der Kanal für das Schweißgerät durch eine flexible Wand voneinander getrennt sind, die während des Säuberungsvorganges sich in den Kanal für das Schweißgerät hin auswölbt und nach dem Säuberungsvorgang durch das Schweißgerät gegen gegenüberliegende Flächen des korrespondierenden Profiles gedrückt wird.

Die Schweißflächen müssen dann durch diese flexible Wand hindurch erwärmt werden. Andererseits ist auch eine Ultraschallschweißung möglich, welche in dieser Konstellation ausschließlich eine Erwärmung der Schweißflächen bewirkt. Desgleichen läßt sich die Schweißhitze auch allein auf induktivem Wege herbeiführen. Dazu ist eine der Schweißflächen wahlweise mit einem Überzug aus Metallpulver versehen oder mit einer dünnen Metallfolie beschichtet.

Für die gezielte Verschweißung ist es von Vorteil, wenn das Schweißgerät bei seiner Bewegung in Längsrichtung durch das Profil keine Drehbewegung ausführt. Dies läßt sich nach der Erfindung dadurch erreichen, daß das Schweißgerät und der zugehörende Kanal einen unrunden Querschnitt aufweisen. Der unrunde Querschnitt hindert die Drehbewegung.

Ferner ist es von Vorteil, wenn das Schweißgerät zwei im Abstand voneinander stehende Schweißflächen aufweist. Die im Abstand voneinander angeordneten Schweißflächen erzeugen zwei im Abstand voneinander verlaufende Schweißnähte, so daß der Zwischenraum einen Kanal bildet. Dieser Kanal kann zur Dichtheitsprüfung mit Druckluft beaufschlagt werden.

Das Schweißgerät wird vorzugsweise so in der abzusenkenden Abdichtungsbahn angeordnet, daß es nach dem Absenken von unten nach oben durch den Kanal gezogen werden kann. Bei dieser Verfahrensweise können dünne Drahtseile als Zugmittel verwendet werden, die ausreichend Platz für die Zuführung von elektrischer Energie zum Schweißgerät lassen.

Der Wasserkanal bzw. Druckluftkanal soll zweckmäßigerweise unten verschlossen sein und durch eine Querbohrung in den Spülkanal zwischen beiden Profilen übergehen. Die notwendige Verbindung beider Kanäle bei gleichzeitiger Abdichtung der Kanäle gegen den umgebenden Bentonit kann auch durch ein Umlenkrohr erreicht werden. Dabei kann auch abschnittsweise gearbeitet werden. Der gewünschte Verschluß des Spülkanales nach unten hin kann auch nach Einziehen der Abdichtungsbahn durch geringes Hochbewegen des Schweißgerätes herbeigeführt werden.

Um zu verhindern, daß die Schweißflächen durch die Membran hindurch plastifiziert werden müssen, kann die Heizpatrone nach der Erfindung nach Freispülen und Freiblasen des Spaltes zwischen den Dichtflächen durch diesen Spalt gezogen oder geschoben werden. Damit ist eine einwandfreie und hervorragende Plastifizierung der Schweißflächen gewährleistet. Allerdings liegen die Schweißflächen nach Durchziehen oder auch Durchschieben der Heizpatrone noch im Abstand voneinander. Nach der Erfindung wird die Membran mit den plastifizierten Dichtflächen bzw. Schweißflächen anschließend mit Druck aus dem hinter der Membran liegenden Hohlraum beaufschlagt. Geeignet ist ein Luftdruck oder ein Flüssigkeitsdruck. Der notwendige Anpressdruck kann auch mit Hilfe eines patronenähnlichen Körpers erreicht werden, der unmittelbar hinter der Membran gezogen oder geschoben wird. D. h. dieser Körper hat geringfügigen Nachlauf gegenüber der Heizpatrone.

Zur Beaufschlagung mit Druckflüssigkeit oder Druckluft ist vorgesehen, daß der hinter der Membran liegende Hohlraum am unteren Ende verschlossen ist. Das kann durch Verschweißen in einfacher Weise erfolgen. Dieses Verschweißen oder Verkleben wird vor Absenken der Abdichtungsbahn und des zugehörigen Profiles herbeigeführt.

Bei Verwendung eines Anpresskörpers ist vorgesehen, daß vor dem Beginn des Schweißvorganges die Heizpatrone in den Spalt zwischen die Dichtflächen gezogen wird und der Anpresskörper unmittelbar schließend derart hinter die Heizpatrone gezogen wird, daß gar keine Flüssigkeit des Bentonits oder nur in sehr geringem Umfang Flüssigkeit in den Spalt zwischen den Dichtflächen und zwischen Heizpatrone und dem durch den Anpresskörper verschlossenen Ende des Spaltes zwischen den Dichtflächen dringt. Das Eindringen von Flüssigkeit kann ganz verhindert werden, wenn Heizpatrone und Anpresskörper keilförmige Übergangsflächen aufweisen. Die keilförmigen Übergangsflächen erlauben bei gleichem Neigungswinkel an der Heizpatrone und dem Anpresskörper einen schließenden Übergang zwischen Erwärmung der Schweißflächen auf Schweißtemperatur und Anpressung. D. h. mit Hilfe der keilförmigen Heizpatrone und des keilförmigen Anpresskörpers kann mit geringem baulichen Aufwand sichergestellt werden, daß sich zwischen der Heizpatrone und dem hinter der Heizpatrone verschlossenen Ende des zu den Dichtflächen gehörenden Spaltes kein Hohlraum bildet, insbesondere keine Flüssigkeitstasche bildet, die zur einer Temperaturabsenkung an den Schweißflächen führt.

Wahlweise kann auch zu Beginn der Schweißarbeiten eine Wassertaschenbildung hingenommen und sofort beseitigt werden. Das geschieht dann in der Weise, daß die Heizpatrone am Umfang und/oder mittig eine Durchtrittsöffnung für Wasser und/oder Luft aufweist, so daß die Heizpatrone in eine Position gefahren werden kann, in der sie oberhalb der Luftzutrittsöffnung für die Luftspülung liegt und der Spalt an den Dichtflächen unterhalb der Luftzutrittsöffnung durch den Anpresskörper verschlossen ist. Dann kann die Wassertasche mit Hilfe von Druckluft leergeblasen werden. Danach befindet sich kein Wasser mehr im verschlossenen Ende des Spaltes zwischen den Dichtflächen und der Heizpatrone, welches die Schweißtemperatur an den Dichtflächen negativ beeinflußen kann.

Durch unrunde Form der Heizpatrone und des Anpresskörpers kann sichergestellt werden, daß weder der Anpresskörper noch die Heizpatrone beim Hochziehen eine Drehbewegung ausführt. Der Drehbewegung wirkt auch die Konfigration mit den keilförmigen Flächen an Heizpatrone und Anpresskörper entgegen. Der so erreichte spurgetreue Lauf der Heizpatrone kann genutzt werden, um zwei parallel verlaufende Schweißnähte an den Dichtflächen zu erzeugen. Die parallel verlaufenden Nähte können zur Prüfung der Dichtheit genutzt werden, wenn am unteren Ende ein Verschluß des Dichtspaltes herbeigeführt wird. Das kann durch eine zusätzliche Schweißflächen an der Heizpatrone erreicht werden. An der Heizpatrone läßt sich das auf verschiedene Weise verwirklichen. Die Heizpatrone ist wahlweise mit zwei in Längsrichtung verlaufenden Schweißflächen versehen, zwischen denen sich eine separat ansteuerbare weitere Heizfläche zum Verschließen des unteren Dichtspaltendes befindet. Die separat ansteuerbare weitere Heizfläche wird unmittelbar nach Verschließen des unteren Spaltendes der Dichtflächen abgeschaltet.

Wahlweise ist anstelle der separat ansteuerbaren Schweißfläche auch eine Brücke zwischen den Schweißflächen für die beiden Längsnähte vorgesehen, welche sich beim Hochziehen der Patrone löst. Diese Brücke kann aus einem Kupfergewebe oder dergleichen bestehen. Dieses Kupfergewebe kann mit einem Heißkleber an der Heizpatrone befestigt sein, der sich mit Erreichen der vorgesehenen Schweißtemperatur löst und nach Hochziehen der Patrone in dem Spalt zwischen den Dichtflächen bleibt, ohne die Abdichtung zu beeinträchtigen. Der Kupfergewebestreifen drückt sich in das plastifizierte Kunststoffmaterial ein und wird allseits umschlossen. Gleichzeitig ist der Kupfergewebestreifen so flexibel, daß er sich der mit dem Anpresskörper verursachten Verformung leicht anpaßt.

Die vorstehenden Lösungen gehen von einer Schweißung aus, wie sie hinsichtlich der Temperaturverhältnisse und der Tiefe der Aufschmelzung bei der Verschweißung von Kunststoffbahnen für die Sohlabdichtung von Deponien oder bei der Verschweißung von Kunststoffbahnen für Dachabdichtungen vorkommen.

Nach der Erfindung kann auch sowohl auf das Sauberspülen wie auf das Freiblasen und Trockenblasen verzichtet werden. Das geschieht nach der Erfindung dadurch, daß entweder mit der Schweißpatrone oder aber mit Hilfe eines vorlaufenden Kolbens die sich im Dichtspalt befindliche Flüssig-Bentonitmasse mit nach oben herausgezogen wird. Dabei schiebt der Kolben bzw. die Schweißpatrone die Flüssig-Bentonitsäule vor sich her. Dann bleibt zwar auf den Dichtflächen noch eine Restfeuchte. Der Schweißpatrone kann jedoch eine solche Temperatur gegeben werden, daß die Restfeuchte verdampft.

An dieser Stelle setzt ein weiterer erfindungsgemäßer Schritt ein, indem der der Verschweißung sonst hinderliche Schmutz bzw. Partikelschicht auf den Dichtflächen dadurch überwunden wird, daß eine Umformung an den Dichtflächen stattfindet. Ein Teil des plastifizierten Materials wird von der Schweißpatrone unter Einschluß der Schmutzpartikel verlagert. Das ist mit einer Änderung des Innenquerschnittes der Fugenbänder verbunden. Wahlweise kann die Querschnittsform durch einen anschließenden Verformungsvorgang weitgehend wieder hergestellt werden. Für die Abdichtung des Spaltes ist das jedoch nicht erforderlich. Vorzugsweise beschränkt sich der Schweißvorgang deshalb auf den ersten o. b. Umformungsteil.

Das Ergebnis der Umformung kann vielgestaltiger Art sein. Wahlweise wird im Dichtspalt ein Steg aufgebaut. Bei mittiger Anordnung der Schweißpatrone im Dichtspalt kann jeweils ein Steg beiderseits der Schweißpatrone aufgebaut werden. Das gibt doppelte Sicherheit für die Verbindung der Fugenbänder.

Der Stegaufbau bedingt eine entsprechende Form der Schweißpatrone. Die Schweißpatrone kann dazu mit Kanälen oder Stegen am Umfang versehen sein.

Ausreichend kann jedoch auch schon eine Änderung der Querschnittsform in der Weise sein, daß z. B. aus einem runden Querschnitt ein ovaler Querschnitt oder umgekehrt erzeugt wird. Dabei wird das plastifizierte und von der Schweißpatrone aus dem Fugenband herausgeschälte Material beiderseits der Schweißpatrone in den Dichtspalt gedrückt bzw. den Dichtspalt verschließend angelagert.

Wahlweise kann die Verbindung der Fugenbänder noch dadurch verbessert werden, daß auf das angeformte Material im Spaltbereich ein Druck ausgeübt wird. Das kann z.B. mit Hilfe einer nachlaufenden Feder erreicht werden, die an die Schweißpatrone angehängt ist. Dabei ist eine Wärmeisolierung zwischen Patrone und Feder von Vorteil.

Nach der Erfindung können Schlösser auch mit Bitumenspachtelmasse oder Fett oder dergleichen gefüllt werden. Beides verhindert beim Ineinanderschieben der Schlösser ein Eindringen von Bentonit. Beides setzt der Schweißpatronenbewegung keinen nennenswerten Widerstand entgegen. D. h. beide Mittel können mit Hilfe der Schweißpatrone leicht aus dem Dichtspalt herausgepreßt werden.

Sowohl die Bitumenspachtelmasse als auch das Fett erhöhen die Verschweißfähigkeit der Schlösser.

Vorteilhafterweise wird sowohl die Bitumenspachtelmasse als auch das Fett vor dem Absenken der Abdichtungsbahnen in die Schlösser gefüllt. Das kann von Hand mit Spritzen geschehen. Das kann auch vollautomatisch erfolgen.

In der Zeichnung sind verschiedene Ausführungsbeispiele der Erfindung dargestellt.

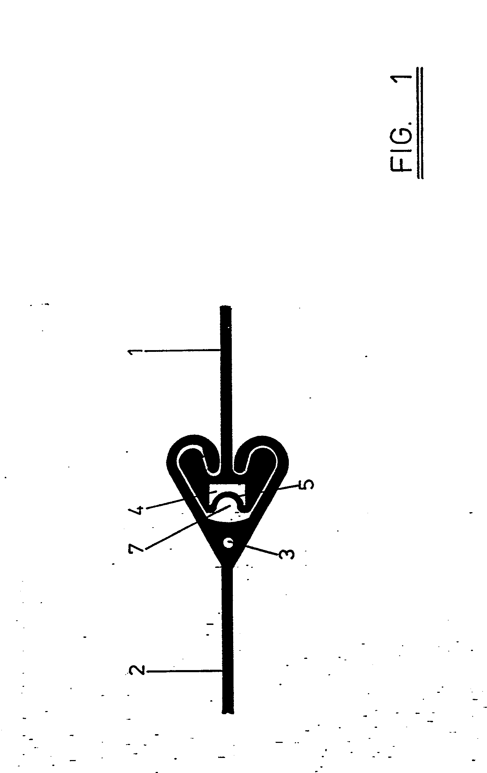

In Figur 1 ist ein Querschnitt durch die die Abdichtungsbahn miteinander verbindenden Profile dargestellt. Danach haben die Profile unterschiedliche Konfigurationen. Das mit 1 bezeichnete Profil ist vorn widerhakenförmig ausgebildet, während das mit 2 bezeichnete Profil den Widerhaken umfaßt. Die Widerhakenform ist vorteilhaft, um ein Auseinandergleiten der Profile beim Ineinanderschieben zu vermeiden. Das Profil 2 besitzt wie die für die Verpressung von Kunstharz vorgesehenen Profile einen Kanal 3. Das Profil 1 besitzt einen Schweißkanal 4. Der Schweißkanal 4 ist so dicht an der Profilspitze angeordnet, daß zum Kanal 3 hin nur eine dünne flexible Wand 5 verbleibt. Die Wand 5 hat 1,5 mm Querschnitt im Ausführungsbeispiel.

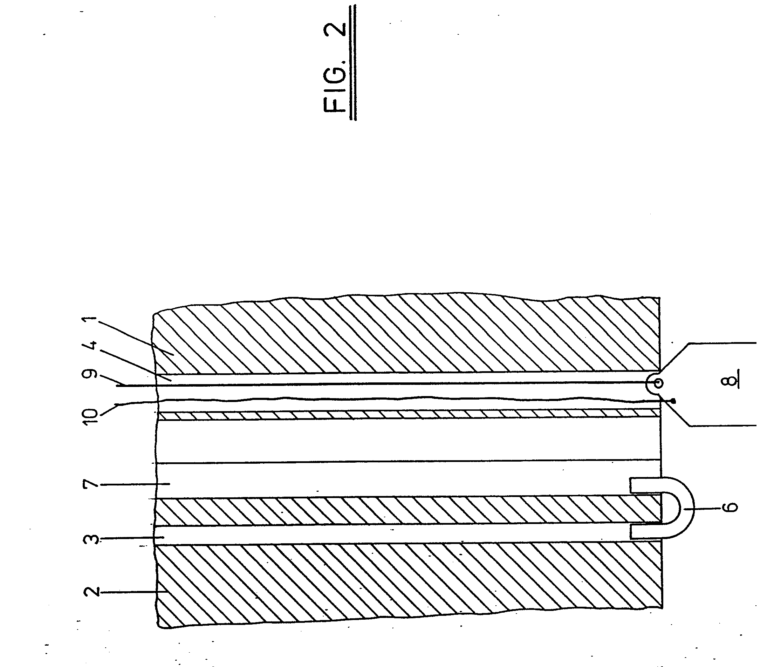

Nach Figur 2 ist der Kanal 3 am Fuß mit einem Umlenkungsrohr 6 versehen. Das Umlenkungsrohr 6 verbindet den Kanal 3 mit einem Kanal 7 zwischen beiden Profilen 1 und 2. Figur 2 zeigt ein Schweißgerät 8, welches mit einem Zugseil 9 gehalten ist, das durch den Kanal 4 geführt ist. Ferner ist durch den Kanal 4 ein Kabel 10 geführt. Das Kabel 10 dient als Stromzuführung für das Schweißgerät 8.

In der Darstellung nach Figur 2 sind beide Profile ineinandergeschoben. Danach wird das Schweißgerät 8 geringfügig nach oben bewegt, so daß sich der Kanal 7 am unteren Ende bis auf die Zuführung durch das Umlenkungsrohr 6 schließt. Anschließend wird der Kanal 3 mit Wasser beaufschlagt, so daß das Wasser vorhandenes Bentonit im Kanal 7 herausspült. Der Wasserbeaufschlagung folgt eine Druckluftbeaufschlagung. Mit der Druckluft wird das Wasser aus den Kanälen 3 und 7 herausgeblasen und der Kanal 7 getrocknet. Anschließend wird das Schweißgerät unter gleichzeitiger Erwärmung des Schweißgerätes auf Schweißtemperatur in Gang gesetzt. Dabei drückt das Schweißgerät 8 die flexible Wand 5 gegen die gegenüberliegenden Flächen des Profiles 2. Dort findet dann eine Verschweißung der Dichtflächen statt. Die richtige Schweißtemperatur wird durch die Vorschubgeschwindigkeit des Schweißgerätes 8 geregelt.

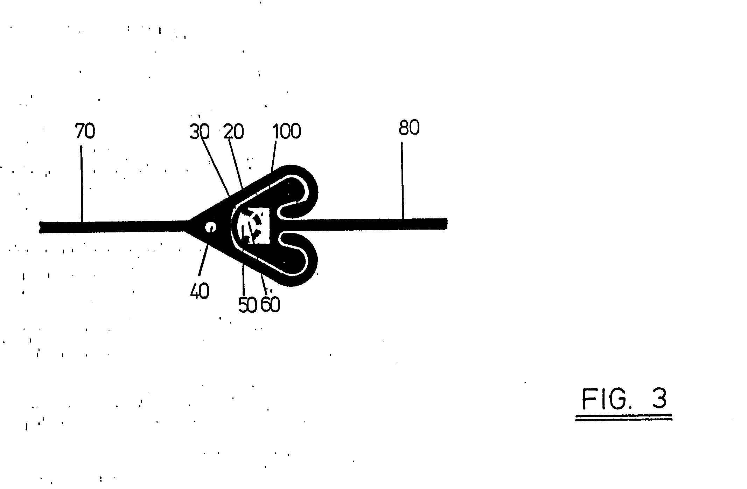

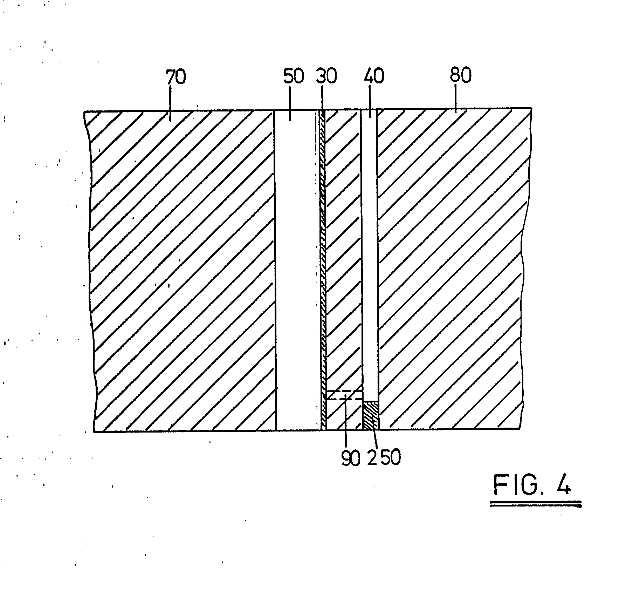

Figur 3 und 4 zeigen eine Nahtstelle zwischen zwei senkrecht in einen Erdschlitz mit Bentonitfüllung eingezogene Abdichtungsbahnen. An der Nahtstelle sind die beiden Abdichtungsbahnen mit Profilen 70 und 80 versehen. Das eine Profil 70 hat eine im Querschnitt wiederhakenförmige Spitze 100 und wird von dem Stück 2 des Profiles 80 umfaßt. Bei dieser Profilkonfiguration kann das Profil 80 leicht über die widerhakenförmige Spitze 100 des Profiles 70 geschoben werden, wenn die zu dem Profil 80 gehörige Abdichtungsbahn in den Erdschlitz abgesenkt wird. Umgekehrt kann auch die widerhakenförmige Spitze 100 in den Teil 2 geschoben werden. Das ist dann der Fall, wenn die zu dem Profil 80 gehörende Abdichtungsbahn bereits in den mit Bentonit gefüllten Erdschlitz abgesenkt worden ist und die zu dem Profil 70 gehörende Abdichtungsbahn erst nachher abgesenkt wird.

Die widerhakenförmige Spitze besitzt ganz vorn eine Ausnehmung. D. h. die Spitze des Widerhakenprofiles ist so ausgenommen, daß eine annähernd runde Öffnung 50 zwischen der widerhakenförmigen Spitze 100 und dem Grund des Teiles 20 in Figur 3 entsteht. An der Spitze 100 ist ein Streifen 30 aus Kunststoffmaterial angeschweißt, der eine bewegliche Membran bildet. Die Membran liegt in der Darstellung nach Figur 3 an dem Profil 80 an und kann auch umgekehrt an der widerhakenförmigen Spitze 100 anliegen. Das hängt davon ab, an welcher Seite der Streifen 30 mit Druck beaufschlagt wird. Zwischen dem Streifen 30 und dem Grund des Profiles 80 sind die nach der Erfindung vorgesehenen Dichtflächen.

Figur 4 zeigt das untere Ende der ineinandergeschobenen Profile 70 und 80 Das untere Ende der Profile 70 und 80 befindet sich in dem dargestellten montierten Zustand am Fuß des Erdschlitzes.

Im übrigen ist das Profil 80 mit einem sich in Längsrichtung des Profiles erstreckenden Kanal 40 versehen. Der Kanal 40 ist am unteren Ende durch einen Pfropfen 25 verschlossen. Oberhalb des Pfropfens 250 befindet sich eine quer verlaufende, z. B. infolge einer Bohrung entstandenen Öffnung 90 Wird nun durch die Bohrung 40 Wasser gedrückt, so gelangt das Wasser zwischen den die Membran bildenden Streifen 30 und die gegenüberliegenden Flächen des Profiles 80 Der Wasserdruck bewirkt, daß der die Membran bildende Streifen 30 sich an die Spitze 100 anlegt. Dann entsteht ein weit geöffneter Spalt zwischen der Membran 30 und den gegenüberleigenden Berührungsflächen des Profiles 80 Dieser Spalt kann mit Hilfe des Wassers sehr leicht und sehr gut von Bentonit und anderen eine nachfolgende Verschweißung hinderlichen Partikeln freigespült werden. An das Freispülen schließt sich eine Druckluftbeaufschlagung an. Die Druckluft drückt das Wasser nach oben aus dem Spalt 50 heraus und trocknet den Spalt 50.

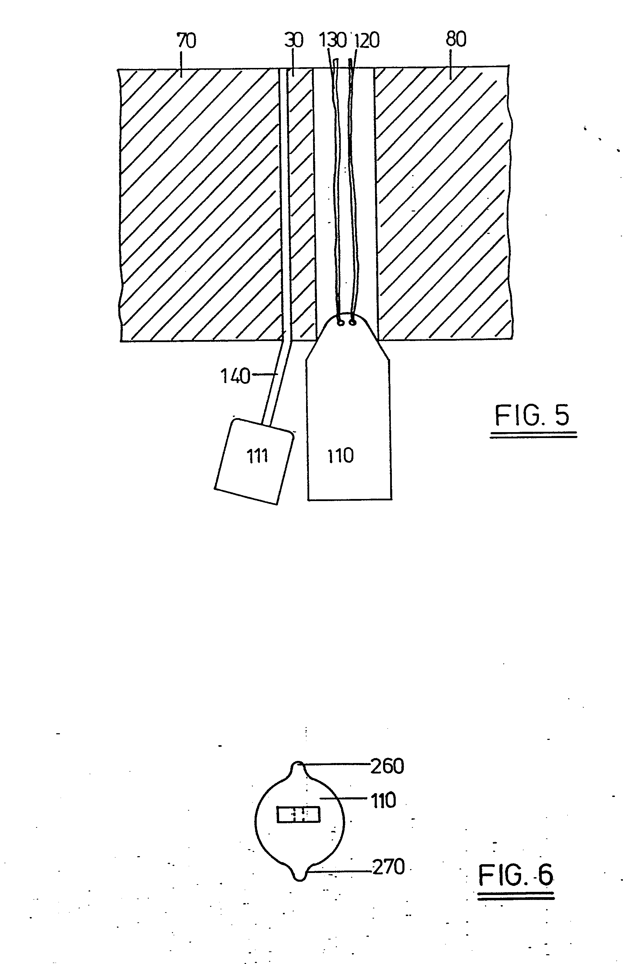

Figur 5 zeigt eine Schweißpatrone 110 und ein Anpresskörper 112 An die Schweißpatrone 110 und den Anpresskörper 110 greifen Zugdrähte 120 und 140 an. Ferner ist an die Schweißpatrone 110 eine Stromzuführung 130 angelenkt. Die Schweißpatrone 110 mit dem Zugdraht 120 und der Stromzuführung 130 wird vor Absenken des Profiles 80 in dem Profil 80 angeordnet. Dazu braucht der Zugdraht 120 und die Stromzuführung 130 nur in die u-förmige Ausnehmung des Profiles 80 für die widerhakenförmige Spitze 100 eingelegt werden und gegen ein Herausfallen durch ein Klebeband oder dergleichen gesichert werden. Das Klebeband wird z. B. an der Schweißpatrone 110 angebracht und zugleich so angebracht, daß die Schweißpatrone 110 am unteren Ende des Profiles 80 seitlich liegt und nicht das Ineinanderschieben der Profile 70 und 80 behindert.

Der Zugdraht 140 wird gleichfalls vor dem Absenken des zugehörenden Profiles montiert. Das geschieht durch Einschieben in den Hohlraum zwischen dem die Membran bildenden Streifen 30 und der widerhakenförmigen Spitze.

Die Schweißpatrone 110 hat eine im Querschnitt der Öffnung 50 angepaßten Querschnitt. Dieser Querschnitt ist unrund. Er besitzt Spitzen 260 und 270 die dadurch entstehen, daß die Spitze 100 zur Öffnung 50 hin abge rundet ist. Die Abrundung gewährleistet ein faltenfreies Anlegen des die Membran bildenden Streifens 3 an die widerhakenförmige Spitze 100.

Die unrunde Querschnittsform hindert die Heizpatrone 10 an einer Drehung während des Hochziehens.

Im Ausführungsbeispiel ist eine Erwärmung der Heizpatrone 110 auf der gesamten Umfangsfläche vorgesehen. Die Heizpatrone 110 wird nach Absenken der Abdichtungsbahnen in die aus Figur 4 und 5 ersichtliche Stellung eingeschaltet. Dann wird die Heizpatrone hochgezogen, bis das untere Ende der Heizpatrone 110 in den Spalt zwischen dem die Membran bildenden Streifen 30 und dem Fuß des Profiles 80 liegt oder noch weiter in den Spalt hineingezogen worden ist. Das läßt sich leicht kontrollier indem nach Straffziehen des Zugdrahtes 120 der Zugdraht 120 um ein zur Heizpatronenlänge gleiches Maß aus dem Spalt herausgezogen wird. Nach dieser Maßnahme wird der Zugdraht 140 straffgezogen, so daß der Anpresskörper 111 den die Membran bildenden Streifen 30 am unteren Ende erreicht und mit weiterer Vorwärtsbewegung der Heizpatrone 110 den Spalt unmittelbar hinter der Heizpatrone 110 schließt. Um den Anpresskörper 111 in die richtige Ausgangsposition zu bringen, kann mit einer deutlich höheren Zugkraft an dem Zugdraht 140 als an dem Zugdraht 120 gearbeitet werden. Die höhere Zugkraft verhindert die Bildung einer Tasche hinter der Heizpatrone 110. Dabei ist ausgeschlossen, daß der Anpresskörper 111 an der Heizpatrone 110 vorbei nach oben gleitet.

Wenn die Heizpatrone 110 und die Anpresskörper 111 ihre Ausgangsstellung erreicht haben, können die Zugdrähte 120 und 140 miteinander gekoppelt werden und können die Zugdrähte mit einer Geschwindigkeit aus den Profilen 70 und 80 gezogen werden, die sich aus der zum Schweißen notwendigen Erwärmung der Berührungsflächen an dem Streifen 30 und der gegenüberliegenden Seite des Profils 80 ergibt.

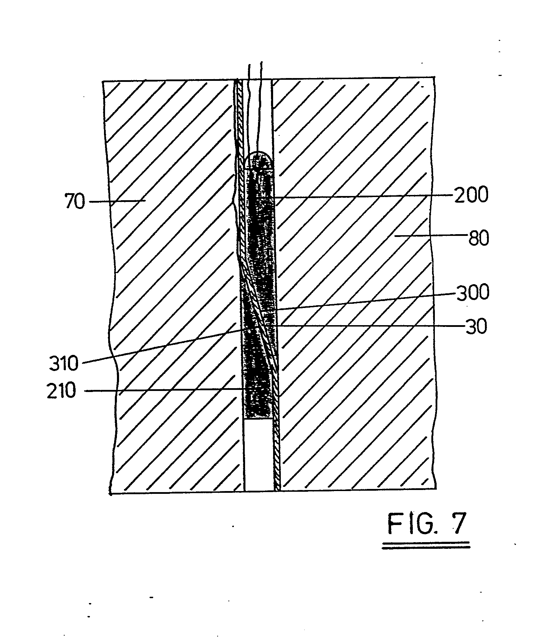

Figur 7 zeigt an einem weiteren Ausführungsbeispiel eine Heizpatrone 200 und einen Anpresskörper 210 anstelle der Heizpatrone 110 und des Anpresskörpers 111.

Die Heizpatrone 200 ist am unteren Ende keilförmig abgeschrägt, der Anpresskörper 210 ist am oberen Ende keilförmig abgeschrägt. Dadurch können das untere Ende der Heizpatrone 200 und das obere Ende des Anpresskörpers 210 in der Figur 7 dargestellten Weise miteinander korrespondieren. Dabei legen sich die Heizpatrone 200 und der Anpresskörper 210 schließend an den die Membran bildenden Streifen 30 und ist ersichtlich, daß hinter der Heizpatrone 200 eine Taschenbildung verhindert wird.

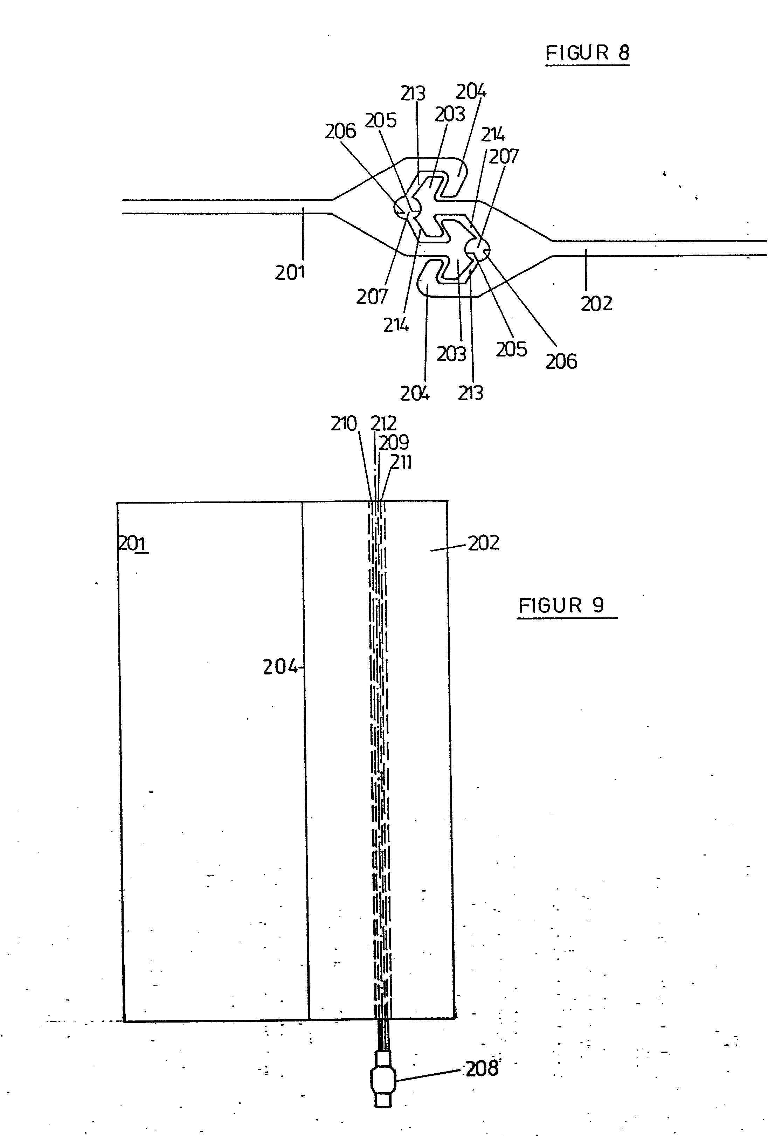

Mit 201 und 202 sind in Figur 8 und 9 zwei Fugenbänder bezeichnet, von denen das Fugenband 201 eine widerhakenförmige Spitze 203 und das Fugenband 202 eine die Spitze 203 umfassende Spitze 204 aufweist.

Am Ende der Spitze 203 befindet sich eine halbkreisförmige Ausnehmung 205, die sich mit einer gegenüberliegenden Ausnehmung 206 in der Spitze 204 zu einer die beiden Fugenbänder 201 und 202 in Längsrichtung durchsetzenden Öffnung den runden Querschnitt ergänzt. Dies ist im montierten Zustand beider Fugenbänder der Fall. Der montierte Zustand tritt ein, wenn die Fugenbänder an ihren den Spitzen 203 und 204 abgewandten Enden mit Abdichtungsbahnen verschweißt sind und die Abdichtungsbahnen nacheinander und unter Ineinanderschieben der Fugenbänder 201 und 202 in einem mit Bentonit gefüllten Erdschlitz abgesenkt worden sind.

In Anwendung der Fugenbänder 201 und 202 auf Paneele sind die Fugenbänder 201 und 202 an ihren den Spitzen 203 und 204 abgewandten Enden in die aus Beton bestehenden Paneele eingeformt. Damit ein Herausziehen vermieden wird, sind die in die Paneele eingeformten Enden in geeigneter Weise profiliert.

Nach Figur 8 ist mit der zuletzt abgesenkten Abdichtungsbahn bzw. mit der zuletzt abgesenkten Fugenband zugleich eine Schweißpatrone 208 mit abgesenkt worden. Die Schweißpatrone 208 wird dazu in eine nicht dargestellte Position unter dem Fugenband gebracht, in der sie das Ineinanderschieben der Spitzen 203 und 204 nicht behindert. Diese Position kann durch angeheftete Kunststoffstreifen oder dergleichen gesichert werden. Die Schweißpatrone 208 kann auch bereits mit dem ersten abgesenkten Fugenband in die Ausgangsposition gebracht werden. In diesem Fall empfiehlt sich auch eine Sicherung der Schweißpatrone 208 in der Ausgangsstellung. Die Sicherung kann in gleicher Weise wie beim Absenken der Schweißpatrone mit dem nachfolgenden Fugenband hergestellt werden.

Nach vollständigem Ineinanderschieben der Fugenbänder 201 und 202 wird die Schweißpatrone 208 über Elektrokabel 209 und 310 mit Strom beaufschlagt. Dadurch erfährt die Schweißpatrone 8 eine Erwärmung. Die Erwärmung kann über einen integrierten Temperaturfühler mit einer Leitung 211 elektrisch gemessen werden. Der Messung folgend kann die Stromzuführung so genau gesteuert werden, daß eine genaue Temperaturhaltung möglich ist.

Nach Erreichen der gewünschten Schweißtemperatur wird die Schweißpatrone mit Hilfe eines an der Schweißpatrone 208 befestigten Zugseiles 212 durch die Öffnung 207 nach oben gezogen. Dabei drückt die Schweißpatrone die in der Öffnung 207 stehende Bentonitsäule vor sich her. Die dazu aufzuwendenden Kräfte sind gering; bei 30 m Flüssigkeitssäule ca. 3 kg. Höher sind die Kräfte, die sich aus einer mit der Schweißpatrone 208 vorgesehenen Aufweitung der Öffnung 207 und Materialverformung ergeben. Die Aufweitung der Öffnung 207 bewirkt zunächst ein Aneinanderlegen der Dichtflächen beider Spitzen 203 und 204 in dem mit 213 bezeichneten Spaltbereich. Das bewirkt ein Verschließen des Spaltes gegen nachströmenden flüssigen Bentonit.

Desweiteren bewirkt eine Aufweitung der Öffnung 207 nach Aufschmelzen der Berührungsflächen mit der Heizpatrone eine Materialverschiebung. Plastifiziertes Material der Spitzen 203 und 204 wird in den Spaltbereich 214 beiderseits der Heizpatrone 208 gezwängt. Das geschieht unter Abschälen der verschmutzten Oberflächen und Einbettung aller im Spalt bzw. der Öffnung 207 verbliebenen Schmutzpartikel. Das Ergebnis ist eine vorteilhafte Stegbildung, die den Spaltbereich 214 verschließt.

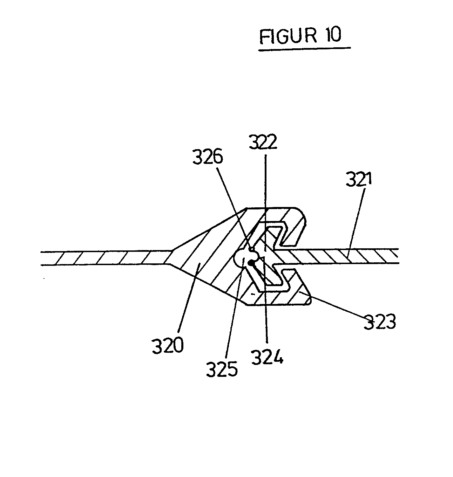

Figur 10 zeigt zwei Fugenbänder 320 und 321 mit Spitzen 323 und 324, von denen die der Spitze 203 entsprechende widerhakenförmige Spitze 322 im Bereich ihrer Rundung 324 zwei in die Öffnung 325 ragende Nasen 326 aufweist. Die Nasen 326 bilden eine Materialanhäufung im Bereich des Dichtspaltes, der die erfindungsgemäße Umformung erleichtert.

Die Figuren 11 und 12 zeigen weitere erfindungsgemäße Fugenbänder. Dabei wird ein wesentlicher Unterschied zu den Fugenbändern nach Figur 8 bis 10 durch eine andere Neigung der Dichtflächen gebildet.

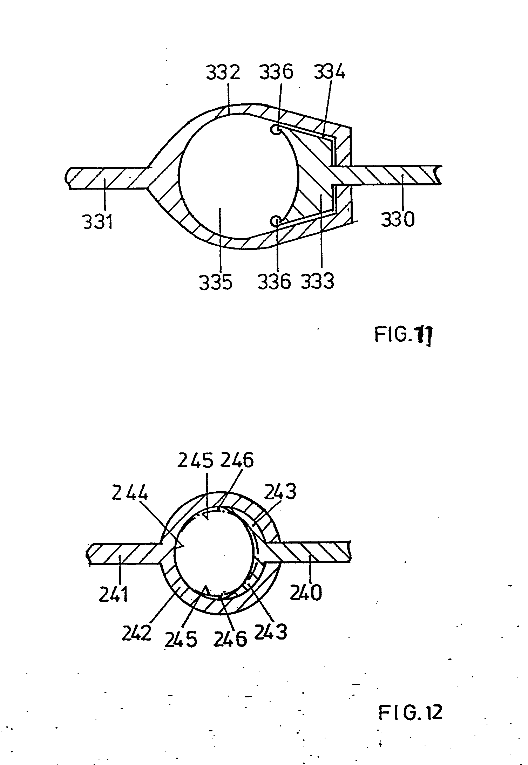

In Figur 11 sind die Fugenbänder mit 330 und 331 bezeichnet. Die mit 333 bezeichnete Spitze des Fugenbandes 330, die von einer Spitze 332 des Fugenbandes 331 umschlossen ist, verjüngt sich zu dem der Spitze 332 abgewandten Fugenbandende hin. Das hat bei der Aufweitung der mit 335 bezeichneten Öffnung ein vorteilhaftes Verschließen des Dichtspaltes zur Folge.

Im Ausführungsbeispiel besitzt auch die Spitze 333 Materialnasen 336, die in die Öffnung 335 ragen und die Verformungsarbeit bzw. Einbettung der der Abdichtung hinderlichen Bentonitpartikel erleichtern.

Figur 12 zeigt Fugenbänder 240 und 241. Dabei besitzt das Fugenband 241 eine Spitze 242 in Form eines geschlitzten Rohres 242.

Die mit der Spitze 242 korrespondierende Spitze 243 des Fugenbandes 240 wird im wesentlichen durch zwei Lippen gebildet. Die sich in beide Umfangsrichtungen erstrecken.

Die Spitzen 242 und 243 bilden in der gezeigten Ausgangsform eine innenliegende Öffnung mit einer Innenmantelfläche 244. Die Spitzen 242 und 243 werden mit Hilfe der Schweißpatrone 208 derart verformt, daß innen eine neue Öffnung entsteht mit einer strichpunktiert dargestellten Mantelfläche 245. Die Überschneidungsflächen beider Öffnungen, welche mit 246 bezeichnet sind, geben die Stege wieder, die nach Beendigung des Umformungsvorganges den Dichtspalt verschließen.

Alle dargestellten Profile bestehen aus Polyäthylen. Polyäthylen ist widerstandsfähig gegen alle in Deponien vorkommenden Sickerwässer. Polyäthylen läßt sich mit den zur Abdichtung üblicherweise verwendeten Kunststoffbahnen aus Hochdruckpolyäthylen oder äthylencopolymerhaltigen Bitumenmischungen verschweißen.

Alle dargestellten Fugenbänder haben im Ausführungsbeispiel eine Dicke von ca. 15 mm. Damit sind die Fugenbänder gut wickelfähig. D.h. die Fugenbänder können mitsamt den Kunst stofabdichtungsbahnen werksseitig vorgefertigt werden. Die Innendurchmesser der Öffnungen 207 bzw. 225 bzw. 235 sind in den Zeichnungen vergrößert dargestellt. Nach der Erfindung kommen als Schweißpatrone 208 solche Schweißpatronen zum Einsatz, die einen Durchmesser von 5 oder 6 mm haben.

Durch die erfindungsgemäße Umformung entstehen den Dichtspalt verschließende Materialschichten von einer Mindeststärke von im Ausführungsbeispiel 3 mm. Wahlweise können auch größere Dicken gewählt werden. Das bedingt größere Umformarbeiten.

## Ansprüche

1. Abdichtung für Schlitzwände, wobei die Schlitzwände durch Ausheben von Erdschlitzen, deren Verfüllen mit Bentonit oder dergleichen entstehen und die Abdichtung durch Einziehen einzelner Bahnen gebildet wird, die an ihren Rändern miteinander verbunden sind und wobei als Verbindungen ineinanderschiebbare Profile vorgesehen sind, dadurch gekennzeichnet, daß mindestens eines von zwei korrespondierenden Profilen (1, 2) zwei Kanäle (3, 7) in Längsrichtung besitzt, von denen der eine Wasser-und/oder Druckluftkanal ist und der andere im ineinandergeschobenen Zustand der Profile durch die Dichtflächen der Profile (1, 2) begrenzt wird, wobei beide Kanäle (3, 7) an einem Ende der Abdichtungsbahn miteinander in Verbindung stehen, und wobei das andere Profil (1) einen Druchtrittskanal (4) für eine Schweißvorrichtung (8) aufweist, der an einer Seite eine flexible Wand (5) aufweist, die Dichtflächen dieses Profils (1) bildet oder daß die Profile an den Dichtflächen freigespült und getrocknet werden und anschließend miteinander verschweißt werden, wobei eine Heizpatrone in dem Spalt zwischen den Dichtflächen durchgezogen oder durchgeschoben wird und anschließend eine Dichtflächen bildende Membran mit einem Druckmittel gegen die plastifizierten Berührungsflächen des anderen Profilstückes gedrückt wird oder gekennzeichnet durch folgende Merkmale:

a) Herausdrücken der im Dichtspalt befindlichen Flüssigkeit mit der Schweißpatrone oder einem vorlaufenden Kolben.

b) Aufweiten des Dichtspaltes, bis die den Widerstand bildenden Kanten der Fugenbänder - schließend aneinanderliegen.

c) Aufschmelzen von Berührungsflächen der Fugenbänder mit der Heizpatrone.

d) Umformen von aufgeschmolzenem Material zu einer Dichtspaltüberdeckung.

2. Vorrichtung nach Anspruch 1, dadurch gekennzeichnet, daß das Schweißgerät einen größeren Querschnitt als der Kanal (7) aufweist.

3. Vorrichtung nach 1 oder 2, dadurch gekennzeichnet, daß das Schweißgerät (8) und der zugehörige Kanal (7) einen unrunden Querschnitt aufweisen.

4. Vorrichtung nach einem oder mehreren der Ansprüche 1 bis 3, dadurch gekennzeichnet, daß das Schweißgerät (8) zwei im Abstand voneinander angeordnete Schweißflächen aufweist.

5. Vorrichtung nach Anspruch 1, gekennzeichnet durch eine Anpressung mittels Druckluft und/oder Druckflüssigkeit und/oder mechanische Anpressung.

6. Vorrichtung zur Schlitzwandabdichtung nach Anspruch 1 oder 5, gekennzeichnet durch Profile (70, 80) von denen eines (80) eine Zuführung (40, 90) für Spülmittel und/oder Druckluft aufweist und von denen ein Profil (70) eine Membran (30) aufweist.

7. Vorrichtung nach Anspruch 1, dadurch gekennzeichnet, daß die Schweißvorrichtung als Patrone (100) ausgebildet ist.

8. Vorrichtung nach Anspruch 7, gekennzeichnet durch eine unrunde Patrone (100).

9. Vorrichtung nach einem oder mehreren der Ansprüche 6 bis 8, dadurch gekennzeichnet, daß die Patrone (100) mit zwei im Abstand voneinander an der Patrone längs verlaufenden Schweißflächen versehen ist.

10. Vorrichtung nach Anspruch 9, gekennzeichnet durch eine Patrone (100) mit separat ansteuerbarer zusätzlicher Schweißfläche zwischen den beiden Längsschweißflächen und/oder einer Schweißbrücke.

11. Vorrichtung nach einem oder mehreren der Ansprüche 6 bis 10, gekennzeichnet durch einen Anpresskörper (110, 210) mit Nachlauf gegenüber der Schweißpatrone (100, 200).

12. Vorrichtung nach Anspruch 11, dadurch gekennzeichnet, daß die Schweißpatrone (200) am unteren Ende und der Anpresskörper (210) am oberen Ende keilförmig ausgebildet sind.

13. Vorrichtung nach Anspruch 1, dadurch gekennzeichnet, daß von beiden korrespondierenden Fugenbändern (1, 202, 220, 221, 230, 231, 240, 241) ein Bereich aufgeschmolzen wird.

14. Vorrichtung nach Anspruch 1 oder 13, dadurch gekennzeichnet, daß ein vorragender Materialteil (226, 236) aufgeschmolzen wird.

15. Vorrichtung zur Durchführung des Verfahrens nach einem oder mehreren der Ansprüche 1, 13 und 14, gekennzeichnet durch eine Schweißpatrone (248) mit Übermaß gegenüber dem Dichtspalt.

16. Vorrichtung nach Anspruch 15, gekennzeichnet durch geschmolzenes Material lenkende Kanäle und/oder Stege an der Heizpatrone (208).

17. Vorrichtung nach Anspruch 15 oder 16, gekennzeichnet durch eine nachlaufende, in den Dichtspalt drückende Feder.

18. Vorrichtung nach einem oder mehreren der Ansprüche 1, 13, 14, dadurch gekennzeichnet, daß die Schlösser mit Bitumenspachtelmasse oder Fett gefüllt sind.

19. Vorrichtungnach Anspruch 18, dadurch gekennzeichnet, daß die Bitumenspachtelmasse oder das Fett vor dem Absenken der Abdichtungsbahnen im Bentonit in die Schlösser gefüllt wird.

FIG. 1

0 283 770

FIG. 2

0 283 770

70　　　　30　20　100　　　　80

40　　　50 60

FIG. 3

0 283 770

70　　　　50　30　　40　　　80

90 2 50

FIG. 4

0 283 770

0 283 770

FIG. 5

FIG. 6

70

200

80

300

30

310

210

FIG. 7

0 283 770

FIGUR 8

FIGUR 9

FIGUR 10

FIG.11

FIG.12